# EUROPEAN PATENT APPLICATION

(11) **EP 4 471 597 A1**
(43) Date of publication of application: **04.12.2024**
(21) Application number: 24177897.6
(22) Date of filing: 24.05.2024
(51) Int. Cl.: G06F 9/54, G06F 9/448, G06F 16/2455, G06F 16/2457, G06F 16/25

(54) **FLEXIBLE AND AUTOMATED OBJECT MAINTENANCE BASED ON ARBITRARY OBJECT TYPES**

(30) Priority: 24.05.2023 US 202318201702
(71) Applicant: SAP SE, 69190 Walldorf (DE)
(72) Inventor: Mietke, Sebastian, 69190 Walldorf (DE)
(74) Representative: Müller-Boré & Partner Patentanwälte PartG mbB

(57) **Abstract**

Techniques and solutions are provided for facilitating the use of a standard (or "specific") object type with different custom (or "arbitrary") object types. One or more custom object types can be mapped to a standard object type. When a custom object type is mapped to standard object type, and a request is received to generate an instance of the standard object type corresponding to an instance of the custom object type, data sources associated with the custom object type can be identified. All or a portion of fields (or other examples of variables) of the data sources can be mapped to fields of the standard object type. An instance of the standard object type is created and linked to the instance of the custom object type. Data from the data sources can be retrieved and stored in corresponding fields of the instance of the standard object type.

## Description

### FIELD

The present disclosure generally relates to providing dynamic use of multiple arbitrary object types with objects of a given, specified object type.

### BACKGROUND

Much of software implemented functionality is implemented using multiple different processes in combination, including different processes within a same software application, different processes of multiple software applications, or between processes of different computing systems, either using a common application or where data is communicated from a first application on a first computing system to a second application on a second computing system.

When data from a first process is used with a second process, the second process typically is either designed to use data in a format of the first process, or the data can be converted from a first format used by the first process to a second format used by the second process. Conversion can be carried out by the first process, the second process, or a different, third process.

Sharing data between processes can cause issues if the processes are strongly coupled. That is, if the first and second processes use data in the same format, changing a data format of either process can cause an overall process that uses the first and second process to no longer function, or at least not function as expected or desired. Similarly, a conversion process may no longer be suitable if a first process changes its data format from an input expected by the conversion process, or if the second process changes its data format from an output produced by the conversion process.

Data format changes can be handled in a number of ways. For example, a conversion process can be modified to accept input in a new format, or produce output in a new format. Or, if a data format of the first or second process changes, the other process can be adjusted to use data in the changed format. However, changing processes can involve significant effort, and be error prone. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions are provided for facilitating the use of a standard (or "specific") object type with different custom (or "arbitrary") object types. One or more custom object types can be mapped to a standard object type. When a custom object type is mapped to standard object type, and a request is received to generate an instance of the standard object type corresponding to an instance of the custom object type, data sources associated with the custom object type can be identified. All or a portion of fields, or other examples of variables, of the data sources can be mapped to fields of the standard object type. An instance of the standard object type is created and linked to the instance of the custom object type. Data from the data sources for the instance of the custom object type can be retrieved and stored in corresponding fields of the instance of the standard object type.

In one aspect, the present disclosure provides a process for associating a first object type with a second object type, including identifying data sources associated with the second object type. A call to an application programming interface is received, where the application programming interface is configured to create an instance of a first object type having a first plurality of attributes. The call includes values for at least a first portion of a second plurality of attributes of an instance of a second object type, instantiated according to a definition of the second object type. At least a portion of the first plurality of attributes correspond to attributes of the second plurality of attributes. The instance of the second object type includes an identifier.

In response to the receiving the call, one or more data sources are identified that include the values for the at least a portion of the second plurality of attributes. Identifiers of the one or more data sources are stored in association with an identifier of the second object type. A first instance of the first object type is instantiated. Instantiating the first instance of the first object type includes assigning an identifier to the first instance of the first object type. A mapping is stored that associates the identifier of the instance of the second object type with the identifier of the first instance of the first object type.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram illustrating interactions between different object types, where implementing processes are "hardcoded" to allow for such interactions.
FIG. 2 is a diagram illustrating aspects of object types, object persistency, and processing logic in a custom environment and a standard environment.
FIG. 3 is a diagram illustrating interactions between different object types, where a first object type can dynamically interact with multiple other object types.
FIGS. 4A and 4B illustrate techniques for maintaining relationships between object types, and instances of object types.
FIG. 5 is a flowchart of a process for creating or updating a model of an object's persistency format.
FIG. 6 is a flowchart of a process of adjusting a first instance of a first object type, or processes using the first instance, based on changes to an instance of a second object type.
FIG. 7 is a flowchart of a process of associating a first object type with a second object type, including identifying data sources associated with the second object type.
FIG. 8 is a diagram of an example computing system in which some described embodiments can be implemented.
FIG. 9 is an example cloud computing environment that can be used in conjunction with the technologies described herein.

### DETAILED DESCRIPTION

### Example 1 - Overview

Much of software implemented functionality is implemented using multiple different processes in combination, including different processes within a same software application, different processes of multiple software applications, or between processes of different computing systems, either using a common application or where data is communicated from a first application on a first computing system to a second application on a second computing system.

When data from a first process is used with a second process, the second process typically is either designed to use data in a format of the first process, or the data can be converted from a first format used by the first process to a second format used by the second process. Conversion can be carried out by the first process, the second process, or a different, third process.

Sharing data between processes can cause issues if the processes are strongly coupled. That is, if the first and second processes use data in the same format, changing a data format of either process can cause an overall process that uses the first and second process to no longer function, or at least not function as expected or desired. Similarly, a conversion process may no longer be suitable if a first process changes its data format from an input expected by the conversion process, or if the second process changes its data format from an output produced by the conversion process.

Data format changes can be handled in a number of ways. For example, a conversion process can be modified to accept input in a new format, or produce output in a new format. Or, if a data format of the first or second process changes, the other process can be adjusted to use data in the changed format. However, changing processes can involve significant effort, and be error prone. Accordingly, room for improvement exists.

The present disclosure can address these problems mentioned above by allowing a second process to flexibly and dynamically use data of a first process. Thus, if the first process changes formats, the second process need not be adjusted, at least significantly, in view of the change to the first process. Disclosed techniques thus also facilitate a second process being used with multiple other processes, which may use data in formats different from the second process, and from each other.

In particular, the present disclosure describes techniques that can allow a first object (which can also be referred to as a "computing object" or "data object," which can be an "object" as generally used in the field of computer programming, such as a collection of data and optionally methods to interact with such data, where examples of objects include abstract or composite data types, including classes or structs) to retrieve data from a second object, where the second object can use a data format different than that of the first object, and where a process using the first object can easily adapt to a change in the second object (whether to a change of a definition of a second object in a same format, or when the format of the second object changes).

As will be described in greater detail, aspects of the present disclosure provide a service that can automatically discover the structure of an object (or a collection of objects, which can be objects use to define an "overall" object - such as where an object is defined with respect to a plurality of database tables). This information can be used to retrieve data associated with the object for use with another object, including an object having a different format or definition.

The service can be defined to work with source objects of different types. Accordingly, the service can include configuration information that associates particular source objects with particular target/destination objects. Similarly, the service can include information that maps particular instances of a source object (or its constituent components) to an instance of a target/destination object.

Disclosed techniques can also include processes that monitor source objects, including to determine, for example, whether a new configuration mapping should be created for a source object structure that has changed. Monitoring can also be used to re-execute processes when a source object instance's value changes, or to execute processes specified for execution when a value of a source object instance (including persisted values) changes.

By decoupling the first and second processes, the first process or the second process may be more easily and independently modified. For instance, if the first process is changed from using a first object type to a second object type, the service can automatically create a mapping between the second object type and the target object. Similarly, if it is desired to change the format of the target object, no changes may be required for the first object, or processes that use the first obj ect.

### Example 2 - Example Tight Coupling Between Object Types

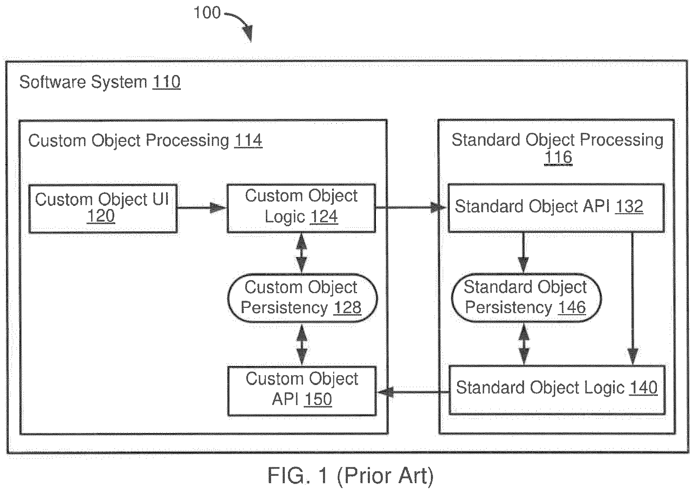

FIG. 1 illustrates an example software environment 100 of an existing arrangement for sharing data between different processes. The software environment 100 includes a software system 110, which can be an environment instantiated on one or more computing systems (where a given computing system can have, for example, one or more hardware processes, one or more memories, and, typically, one or more secondary storage devices).

Although the present disclosure is not limited to such a scenario, for both the software environment 100, and other software environments that will be discussed that illustrate aspects of the disclosed innovations, it may be useful to consider a scenario where a user inputs data into a form, such as using a web browser, and the data is saved into an instance of a first object type, which can be referred to as a custom object (or custom object type), that stores the data input by the user, and optionally other information (such as data retrieved using information provided by the user, or data that was used to generate the form or caused the form to be generated/presented to the user). In a more particular example, the form can represent an application to apply for government benefits.

Another software process uses data provided by the user, and optionally other information, to determine whether the user is eligible for benefits, as well as information such as a type of benefit, an amount of a benefit, or a schedule at which the benefits should be provided to the user. That software process uses another type of object, which can be referred to as a standard object. As a particular example, standard objects can be those created/delivered by a software company and used in providing/implementing generic process steps.

In particular cases, the standard object, and processes using the standard object, are specifically configured to work with the custom object. Thus, if the structure of the custom object changes, or a different type of custom object is used, the processes of the standard object may no longer function, since the data from the expected custom object is no longer available/retrievable.

Thus, in order to have an overall process remain functional, a company implementing or providing the overall process may be reluctant to change the custom object, even if additional functionality or improved performance might be provided by a different type of custom object. Or, code for the standard object, or functionality that uses the standard object, may need to be rewritten to account for a new type of custom object, which can be resource intensive and error prone. Again, because of the effort in harmonizing an overall process given changes to a custom object, even if a process is updated to account for a new custom object, a company may be reluctant to make additional changes to the custom object for quite some time.

In addition, if the standard object and processing are used with multiple clients, all of the clients may be essentially "locked in" to a particular type of custom object, unless a software provider chooses to unilaterally require a new type of custom object, which can be quite inconvenient for users, as they may have to adapt their own processes to use the new custom obj ect.

Returning to FIG. 1, the software system 110 includes a custom object processing component 114 and a standard object processing component 116. The custom object processing component 114 provides a custom object user interface 120 that can be provided to a user, such as through a web browser. In the working example described above, the custom object user interface 120 can present a form to a user, where a user can input information into various form fields. The information provided in the form fields can correspond to data members of the custom object.

For example, the form can present a "first name" field, where the input data is then saved to a "firstName" field (or attribute, or, more generally, where a field can correspond to a variable, such as a member variable of an abstract data type) defined for the custom object. In a more particular example, the custom object can include (or can be used in association with, such as in a persistency layer) one or more database tables configured to store values for data members of the custom object, where a column of a table can correspond to a particular field. Thus, a row of a table may have a "firstName" column, where a given row can store a particular input value for the "first name" field, and optionally other columns having values that are associated with the form instance having the particular input value for the "first name" field.

The custom object processing component 114 can include custom object logic 124. The custom object logic 124 can perform actions such as assigning input data (and optionally other data) to a custom object, or saving custom object data to custom object persistency 128. In a particular example, the custom object can be an instance of an abstract or composite data type that is maintained in memory, and data in the custom object can be saved to one or more relational database tables that are implemented in the custom object persistency 128. In a specific implementation, a custom object type, and optionally a standard object type, can be implemented as BusinessObjects, as implemented in technologies available from SAP SE of Walldorf, Germany. BusinessObjects can use objects in a virtual data model (CDS views, also as implemented as in SAP technologies), which in turn can reference relational database tables. Standard objects can also be implemented as BusinessObjects, such as being delivered by SAP for particular processes/use scenarios.

The custom object logic 124 can also provide data to a standard object application programming interface (API) 132 of the standard object processing component 116. As an example, the standard object API 132 may provide a method for creating a new instance of a standard object type that corresponds to a newly created custom object. The method can include parameters for various argument values provided by a user through the custom object user interface 120. Different standard object APIs 132 can be created for different standard object types.

The standard object API 132 can save data corresponding to a custom object as a new instance of a standard object in standard object persistency 146. The standard object API 132 can also provide information (including an instance of the standard object) to standard object logic 140. The standard object logic 140 can perform various actions on an instance of a standard object. For example, in the benefits example discussed above, the standard object logic 140 can calculate any benefits to which a user may be entitled. As part of the processing, the standard object logic 140 can perform create, read, update, and delete (CRUD) operations with respect to the standard object persistency 146, including storing values produced by various calculations, in addition to persisting information received from the custom object.

In some cases, particular processes of the standard object processing component 116 can use custom object data beyond that provided through the standard object API 132. In these cases, the standard object logic 140 can call a custom object API 150 provided by the custom object processing component 114. The standard object logic 140 is typically programmed to call the custom object API 150 (including particular methods of the API), including particular method identifiers, and using particular arguments (including in particular data types) expected by a method of the custom object API. Thus, functionality of the standard object logic 140 may no longer function if the custom object API 150 is no longer available, or if the API/its methods are changed, such as terms of name or in terms of a number, type, or expected order of arguments. Similarly, processes of the standard object logic 140 may not be configured to process data as received from a changed custom object API 150.

The custom object API 150 can be used by the standard object logic 140 to obtain (read) additional data regarding a particular instance of a custom object type. However, the custom object API 150 can also provide write functionality, such as to provide a value for a field of the custom object type that links an instance of the custom object type to a corresponding instance of a standard object type.

### Example 3 - Example Use of Data from First Object Type with Second Object Type and Associated Processing for Second Object Type

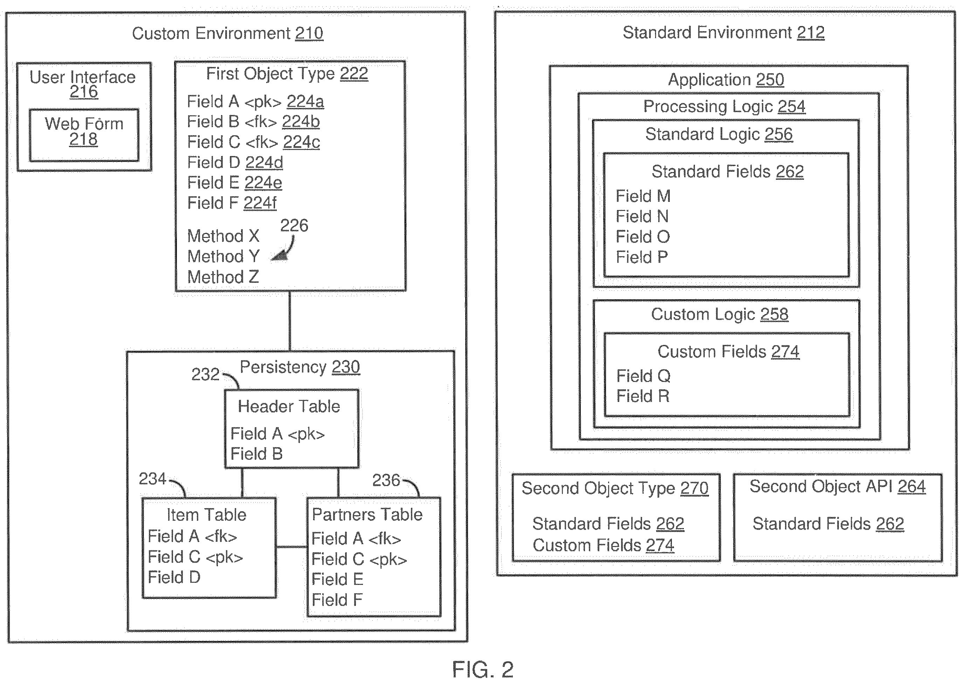

FIG. 2 illustrates components of a custom environment 210 and a standard environment 212, where the custom environment and the standard environment can use, respectively, custom objects or standard objects, including as discussed in conjunction with FIG. 1.

The custom environment 210 includes a user interface 216, which can present a web form 218, where the user interface can at least generally correspond to the custom object user interface 120 of FIG. 1. The custom environment 210 includes a first object type 222, which can include a plurality of data members 224 (shown as 224a-224f) and a plurality of methods 226. At least a portion of the data members 224 can be configured to store values provided through the form 218.

Data in the first object type 222 can be stored in persistency 230, which is shown as three related database tables 232, 234, 236. In particular, the table 232 is a header table, which is related to table 234, which is an item table, and where "header table" and "item table" can have the meaning of those terms as used in technologies available from SAP SE of Walldorf, Germany. The tables 232, 234, 236 typically have a primary key, which is formed from one or more of the data members 224 and is useable to uniquely identify rows of a table.

The primary key data member or members (indicated in FIG. 2 using "<pk>") of a given table can be included in other tables, which thus act as foreign keys that can be used to "connect" related data between different database tables. As shown, both tables 234 and 236 are related to table 232, as they include the primary key (field A) of the header table 232. Table 236 is also related to table 234, since table 236 includes the primary key data member of the table 234. In some cases, a header table 232 may be related to multiple other tables, but at least a portion of such multiple other tables may lack direct relationships to other tables (other than the header table), including having tables that are only directly related to/directly reference the header table.

Foreign key relationships (indicated in FIG. 2 using "<fk>") can be used to determine sets of related tables. In a particular example, a data dictionary or information schema of a database can be analyzed to determine what tables are related, including identifying tables that are related to a particular, specified table. For example, considering the tables 232, 234, 236, the tables 234 and 236 can be identified as related to the table 232 since the tables 234 and 236 have a foreign key relationship with the table 232. Similarly, table 236 can be identified as related to the table 234 since the table 236 has a foreign key relationship with the table 234. A data dictionary, information schema, or similar metadata repository can be used to identify table structures, including for purposes of identifying related tables and attributes of particular tables.

Other objects can be related in a similar manner, such as when a class includes an instance of another class as a data member. As another example, technologies of SAP SE of Walldorf, Germany, provide a type of virtual data model known as CDS (core data services) views, which in turn can be defined with respect to database table. CDS views can be related to one another through, for example, associations or JOIN conditions.

The standard environment 212 includes an application 250 that includes processing logic 254, which includes standard logic 256 and custom logic 258. The standard logic 256 can process standard fields 262, where values of the standard fields can be obtained from data members 224 of the first object type 222 (or more precisely, from an instance of the first object type). The standard fields 262 can represent fields whose values are provided through a standard method, such as a method provided by an API (such as the standard object API 132 of FIG. 1).

The standard environment 212 is shown as having a second object API 264, that is configured to receive values for the standard fields 262. Values for the standard fields 262 can be stored in an instance of a second object type 270, which can optionally include custom fields 274 (corresponding to data members 224 that are not standard fields 262), such as custom fields that are processed using the custom logic 258 of the application 250, where values for the custom fields can be obtained from an instance of the first object type 222. In other examples, the custom fields 274 can be stored in association with an identifier of a particular instance of the second object type 270, but not in the instance of the second object type. For example, values for the custom fields 274 can be stored in persistency, or can be maintained in an instance of another object type. When the values are stored in persistency, they can optionally be stored in persistency for the second object type 270, or in separate persistency.

While values can be stored in the standard fields 262 or the custom fields 274 of an instance of the second object type 270, in other implementations those values need be stored. That is, values for at least some fields 224 of an instance of the first object type can be obtained "by reference" (using pointer-type functionality), which can be facilitated by the custom object API 150. In other cases, such as if the standard object type instance is in a same system as the custom object type instance, the values for the custom fields 274, and optionally the standard fields 262, can be obtained by reference without the use of the API 150, provided that information linking the standard object type instance and custom object type instance is available. In yet further examples, some values for the standard fields 262 or the custom fields 274 can be persisted in an instance of the second object type, while values for other standard fields or custom fields can be obtained by reference to an instance of a custom object type, but are not persisted in the standard environment 212.

Values for the custom fields 274 can be obtained in various ways, such as using an API provided by the custom environment 210 or by submitting a query to the custom environment (where the query can be initially received through an API of the custom environment).

In the context of the government benefits use case using technologies of SAP SE, to provide a more concrete example of how the disclosed techniques can be used, disclosed techniques can use generic data structures to retrieve data from arbitrary custom BusinessObjects. As an example, a reference to the overall serialized data of the custom BusinessObject is passed to a customer "exit" (a trigger in a standard process to execute custom logic for a particular customer), which is called within the standard logic.

Disclosed techniques can also be thought of as parsing data from custom BusinessObjects to a unified format, e.g., XML. The customer can then implement the custom exit to perform operations using the parsed data. As an example, a web form can contain a huge amount of data, with information to apply for a specific benefit. The standard API is called to create the standard application BusinessObject. This standard application has a customer exit to calculate the entitlement period of the specific benefit, based on some web form data. Standard logic (enhanced by disclosed techniques) determines the correct instance of the web form, retrieves the data from the web form, serializes the data, parses the data to a unified format and passes a reference through the signature of the customer exit to the custom implementation of the customer exit. Finally, the customer can access the custom fields, to calculate the entitlement period.

### Example 4 - Example Dynamic and Flexible Use of First Object Type with Multiple Object Types

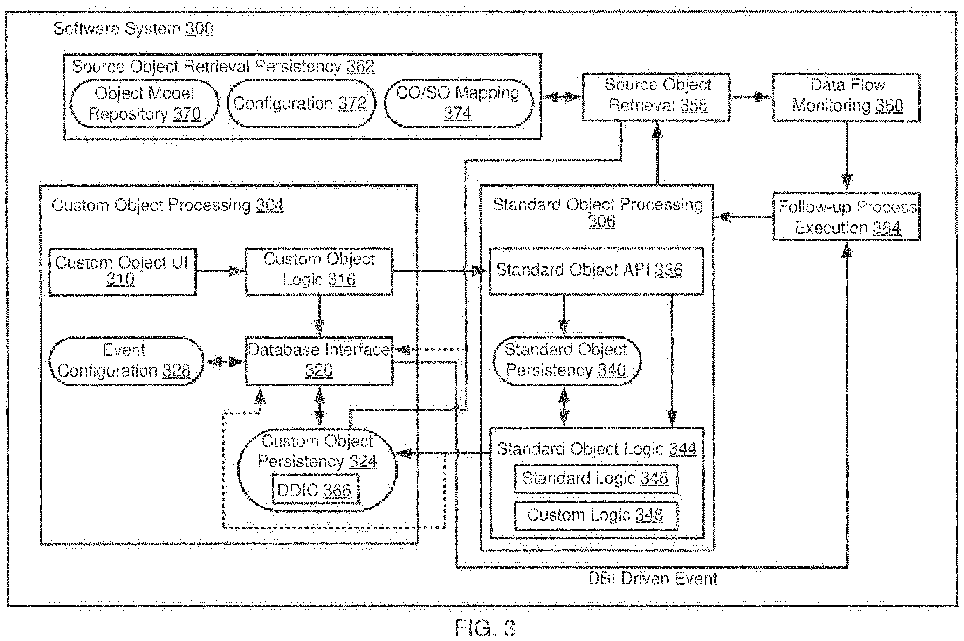

FIG. 3 illustrates a software system 300 in which disclosed technologies can be implemented. The software system 300 will be described using the example discussed before - of a custom object used to store data provided by a form, which is then provided to a standard object for processing. Again, this scenario is intended to help the reader understand the disclosed innovations, but does not limit the scope of the disclosure. For example, data can be provided in ways other than using a form, and the various details of how custom or standard data objects can vary from those described in this Example 4.

The software system 300 includes a custom object processing component 304 and a standard object processing component 306. The custom object processing component 304 can include a custom object user interface 310, through which a user can provide values to be stored in an instance of a custom object of a particular object type (that is, a particular object can have a particular definition, such as shown for the first object type 222 of FIG. 2, and where other custom objects can have different definitions, such as including different member fields or member methods).

In other cases, values can be provided for a custom object in another manner, such as having all or portion of values being provided by a computing process, where at least some of the values may have originated from user input. That is, for values provided by user input, the values can be directly or indirectly provided to be assigned to fields of an instance of a custom obj ect.

Data provided for an instance of a custom object, whether from the custom object user interface 310 or elsewhere, can be processed by custom object logic 316. In a particular implementation, the custom object logic 316 causes values of an instance of a custom object type to be stored in persistency 324, such as one or more relational database tables. The storage of data in the persistency 324 can be mediated by a database interface 320. In other cases, such as when data is persisted in another manner (such as using JSON files or XML files or, more generally, using a serialized format), another type of interface can be used, or the custom object logic 316 can include functionality to persist particular instances of a custom object type.

As will be further described, logic associated with a standard object that is associated with a particular custom object type can be implemented to account for changes to a definition of a custom object type, or to particular instances of a custom object type. Various events can be stored in event configuration 328. For example, events can be defined to track the addition or removal of member fields, or changing of a datatype for a particular member field (which can also be considered as a deletion of a member field in one datatype and addition of a member field in another datatype), or for tracking adding, removing, or changing values for a particular field of a particular instance of a custom object type..

Events can be defined for one or both of a definition of a particular custom object type or a particular instance of a custom object type. In a particular implementation, the database interface 320 monitors requested actions to determine if they trigger a particular event defined in the event configuration 328. In the example of a web form for government benefits implemented as a custom object, an event can be modifying an application period for applying for a particular benefit. An event can detect this change, which can trigger a follow-up process, such as creating another instance of the standard data object. That is, assume that an application period is changed from 2023 to 2023-2024. For a variety of reasons, it may be desirable not to change or delete an original instance of a web form created using the first time period value. Accordingly, a follow-up process can generate a new instance of the web form (including as instances of one or both of custom object types or standard object types) having the updated application period. Since the instance is new, the new instance can be processed, such as to determine whether the application for benefits is approved.

In a particular implementation, events are only raised if the affected data member satisfies particular criteria, such as being used in custom processing using an instance of a standard object type (such as processing implemented in a customer exit, as described above). Raising events upon such changes can improve performance, since event processing is only triggered if the change makes a practical difference.

The custom object logic 316 can call a standard object API 336 of the standard object processing component 306. For example, the standard object API 336 can include a method to create a new instance of a standard object type or instance based on data provided through the custom object user interface 310, or from a custom object. The standard object API 336 can also include methods to modify or delete instances of standard object types or instances corresponding to a particular instance of a custom object type.

The standard object API 336 can cause the newly instantiated standard object instance to be saved to standard object persistency 340, or for a previously persisted standard object instance to be updated or deleted. While the format used with the standard object persistency 340 can vary, in various implementations the format can be relational database tables, objects in a virtual data model, XML files, or JSON files (or, more generally, CSON (core schema notation) files).

Note that the standard object persistency 340 and the custom object persistency 324 can use the same format or can use different formats. In a particular example, both the standard object persistency 340 and the custom object persistency 324 store data in one or more relational database tables. However, typically the definition/structure of the persistency 324, 340 differs in some manner between a custom object and a standard object, although in a particular example a custom object type and a standard object type can have different definitions, but all or a portion of the persistency for these objects can be the same.

In addition to persisting/updating a persisted standard object instance, the standard object API 336 can send a new or updated standard object to standard object logic 344. For example, the standard object logic 344 can have methods that can be called to start a particular process using a new/updated standard object instance, where in some cases the process can be specified in the call to the standard object API 336 by the custom object logic 316, or the process can otherwise be determined from information provided in the call, or where different API methods are provided for different processes involving data from an instance of a custom object type.

In the example scenario of a user providing information through a form that is then processed to determine whether the user is eligible for benefits, the benefit determination can be implemented as part of the standard object logic 344. The standard object logic 344 can include one or both of standard logic 346 or custom logic 348. In the benefits example, the standard logic 346 can represent routine calculations/processes provided by a software vendor for use by multiple clients.

Custom logic 348 can represent additional logic provided by the software vendor for a particular use scenario (for example, for different kinds of benefits or for benefits in different jurisdictions) or can represent particular logic requested/implemented for a particular client. For example, a particular client may wish to categorize benefits information/expenditures in different ways, or may wish to perform additional calculations based on one or both of information from a custom object or information calculated using the standard logic 346. An interface can be created to facilitate the creation of custom logic 348 that is easily integrated with the standard object logic 346.

In some cases, information from a custom object needed by the standard logic 346 or the custom logic 348 may not have been provided through a call from the custom object logic 316 to the standard object API 336. Thus, the standard object logic 344 can be configured to obtain additional information about a custom object instance by communicating with the custom object processing component 304, such as by reading information for a custom object instance from the custom object persistency 324. In a particular example, an identifier and type of an instance of a custom object type are passed to the standard object API 336, and additional information can then be retrieved, such as from the custom object persistency 324, using other techniques.

Requesting information from the custom object persistency 324 can be accomplished in a variety of ways. In some cases, an entire file or set of data can be requested from the custom object persistency 324, and then relevant information can be extracted by the standard object logic 344. For example, an entire JSON file defining a custom object instance can be obtained by the standard object logic 344 from the custom object persistency 324. In other cases, information can be selectively retrieved from the custom object persistency 324, such as by submitting a query to the custom object persistency 324, either directly or through another component, such as through the database interface 320. If all information for a custom object instance is desired, a query equivalent to a "select all" statement can be requested, including by providing an identifier of a custom object instance, where the use of this information in the software system 300 will be further described.

More specific queries may also be executed to obtain data from the custom object persistency 324, such as operations to select specific fields. Although the communication between the standard object logic 344 and the custom object persistency 324 has been described as a read operation, in some cases the standard object logic can request that data be written/updated in the custom object persistency, where such an update may optionally trigger one or more processes of the custom object logic 316 (such as providing a notification that data has been added to a custom object instance or changed in a custom object instance). In a particular example, an instance of a custom object type can be modified to include a refence to a corresponding instance of a standard object type. In more particular examples, modification of the instance of the custom object type by standard object processing can be limited to creating/modifying such a link.

In a particular implementation, data used for the custom logic 348 is obtained from the custom object persistency 324 before the custom logic is called. In this manner, processing can be expedited, as the data is already available for use by the custom logic 348. Further, since the standard object logic 344 includes functionality to obtain data from the custom object persistency 324, custom logic 348 can be defined without having to "worry" about how the additional custom object data is obtained.

Correspondence between particular custom object types and standard object types, as well as information about the structure of a custom object type, and correspondence between particular custom object instances and particular standard object instances can be facilitated using a source object retrieval component 358, which in turn can access a source object persistency 362 (where data can be stored, for example, in relational database tables, XML files, JSON files, or another format). In some cases, data stored in the source object persistency includes mappings between custom object types and standard object types, information about data models of custom object types, and/or information about mappings between standard object type instances and custom object type instances, but does not include data associated with a particular instance of a custom data object or a particular instance of a standard data object.

The source object retrieval component 358 can perform a variety of actions, including determining at least certain elements of a data model associated with a custom object type. In a specific example, when a custom object and a standard object are first associated through a call by the custom object logic 316 to the standard object API 336, the call can include information such as custom object type or a custom object instance identifier. A leading data source of the custom object type can then be determined by the source object retrieval component 358 using configuration information of the source object retrieval persistency 362 .

A leading data source is typically selected as a data source from which related data sources for a given custom object type can be identified, such as a root data source in a collection of data sources that are used to define/persist a custom object type. In the example persistency 230 of FIG. 2, the header table 232 can be considered a leading data source (in this case a leading table), as both the tables 234 and 236 refer to the header table 232, and by identifying the tables 234, 236, the relationship between tables 234 and 236 can be identified. Thus, the source object retrieval component 358 can analyze relationships such as foreign key relationships or associations for the leading data source to determine a collection of related data model objects that store information for a custom object type.

The information used by the source object retrieval component 358 can be obtained from different sources depending on implementation. In some cases, relational information can be obtained directly from objects in the custom object persistency 324, such as relationships expressed in a JSON or XML file. In other cases, metadata for objects in the custom object persistency 324 can be maintained in a repository, such as a data dictionary (or information schema) 366. The structure of a particular custom object type can be stored in an object model repository 370 of the source object retrieval persistency 362. The information in the object model repository 370 can be used, for example, by the standard object logic 344 in obtaining additional data for a custom object instance from the custom object persistency 324.

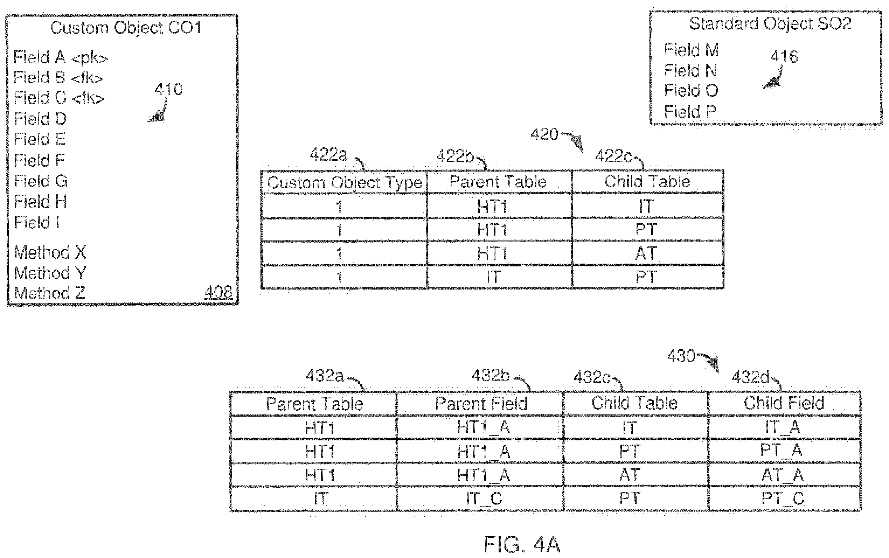

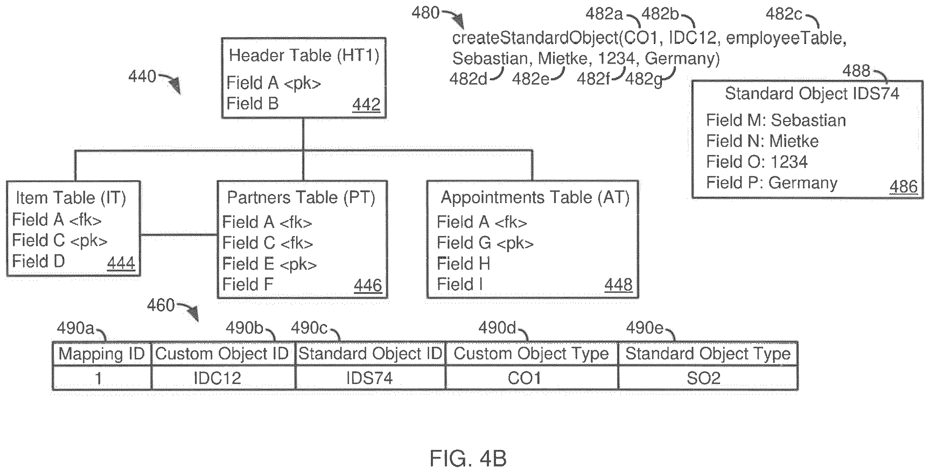

More specifically, in a particular implementation, the source object retrieval component 358 retrieves an identifier and a type of a standard object type or a custom object type, and provides data from a custom object type instance, such as in a standardized format. The source object retrieval component 358 can also determine a custom object type that corresponds to a standard object type. The source object retrieval component 358 can then determine a leading data source for the custom object type, using data stored in the source object retrieval persistency 362. Relationships between the leading data source and other data sources of the custom object type source can also be determined. For example, a leading data source may be a "header table," and may be linked to other data sources of the custom object type, such as "item tables," as those terms are used in technologies of SAP SE, of Walldorf, Germany, and as further described in the discussion of FIGS. 4A and 4B.

Note that other/additional techniques can be used to determine relationships between data sources for a custom object type, including using machine learning techniques. Consider, for example, when an instance of a custom object data type is persisted, such as using the database interface 420. A group of related entries may be persisted for multiple tables. If values for fields of two different tables are identical, this can indicate a relationship for the fields of the tables, even if the relationship is not a foreign key relationship. Similarly, tables that are consistently updated together can be considered as related even if values of the tables are not identical.

The source object retrieval component 358 can communicate with the database interface 320 to determine relationships between fields of different tables, which in turn can be used to update relationships stored in the object model repository 370.

Queries can be executed to retrieve data from data sources associated with the instance of the custom object type, including using those relationships. A reference to data for the instance of custom object data can be passed to custom processing logic, such as to a custom exit.

The source object retrieval persistency 362 can also store configuration information 372. The configuration information 372 can include a mapping of a particular custom object type to a particular standard object type (that is, one or both of the custom object processing 304 or the standard object processing 306 can use multiple types of custom objects or multiple types of standard objects, respectively). The configuration information 372 can optionally include, for particular pairs of custom objects and standard objects, an identifier of a leading data source used to create a respective model in the object model repository 370, or an identifier useable to identify a model for the associated custom data object in the object model repository 370. In at least some implementations, the identifier of a particular custom object type can be used to locate the associated model in the object model repository.

In addition to associating particular custom object types with particular standard object types, it is typically desirable to maintain an association between a particular instance of a custom object type and its corresponding instance of a standard object type. For example, the standard object logic 344 may generally perform operations with an instance of a standard object, using the identifier of the standard object. However, if information is to be retrieved from the custom object persistency 324, or updated information sent to the custom object persistency, the identifier of the corresponding custom object instance may be needed, since that is the identifier used by the database interface/custom object persistency. Thus, the source object retrieval persistency 362 maintains custom object instance/standard object instance mappings 374. The mappings 374 can be automatically created, such as when an instance of a custom object type is used to create an instance of a standard object type.

The source object retrieval component 358 can communicate with a data flow monitoring component 380. The data flow monitoring component 380 can monitor processing of calls from the custom object logic 316 to the standard object API 336, such as to determine whether values of an existing standard object instance have changed. If a value of a custom object instance has changed, and in turn a correspondence standard object instance, the data flow monitoring component 380 can determine whether the field is used in the standard object logic 344. In some cases, no action is taken if a value of a field has changed, but is not used in the standard object logic 344. If the field is used in the standard object logic 344 (or in some cases, even if the field is not used by the standard object logic), a follow up process can be initiated by a follow up process execution component 384. The follow up execution component 384 can, for example, cause processes of the standard object logic 344 to be reexecuted, or specific processes of the standard object logic that are configured to handle data changes can be collected.

The follow up execution process component 384 can also communicate with components of the custom object processing 304. In particular, the follow up process execution component 384 can communicate with the database interface 320, such as when the database interface determines that an event specified in the event configuration 328 has occurred.

### Example 5 - Example Techniques for Maintaining Correspondence Between Object Types and Instances Thereof

FIGS. 4A and 4B illustrate examples of components/information described in conjunction with FIG. 3. FIG. 4A illustrates a definition 408 of a custom object type, which can be as described for the first object type 222 of FIG. 2, including having data members 410 corresponding to the data members 224 of FIG. 2. FIG. 4A also provides a definition 414 of a standard object type, which includes as data members 416 the standard fields 262 of FIG. 2.

At least a portion of the data members 410 of the custom object type definition 408 may correspond to data members 416 of the standard object type definition 414. For example, field M of the standard object type definition 414 may correspond to field D of the custom object type definition 408. Thus, when an instance of the standard object type is created according to the definition 414, such as by a call to a standard object API, a particular value of a field D can be stored as a value for field M. Referring to FIG. 3, the source object retrieval persistency 362 can store mappings between fields of custom object types and fields of corresponding standard object types.

FIG. 4A illustrates a table 420 (which uses the data model 440 of FIG. 4B) that illustrates a particular example of an object model that can be maintained in the object model repository 370 of FIG. 3. The table 420 has a column 422a that identifies a particular custom object type associated with a row of the table. Optionally, the table 420 can include a column (not shown) that identifies a particular standard object type to which a given custom object type corresponds. The table 420 also includes a column 422b that identifies a parent table and a column 422c that identifies a child table that is related to the parent table.

As an example, in a data model used for the custom object type, for a foreign key relationship, the table having the foreign key can be the related (or "child") table, while the table for which the foreign key is a primary key can be the source (or "parent") table. However, source and related tables can be defined differently, such as a source table being a table having a particular attribute or set of attributes (such as defining a foreign key) and the related table being a table that can be accessed using that attribute or set of attributes.

A table 430, also using the data model 440 of FIG. 4B, can be used to maintain a correspondence between fields of a parent table, for a custom object type, and fields of child tables, where a child table has fields that correspond to at least some of the fields of a parent table. Columns 432a and 432b identify, respectively, a parent table and a field of the parent table. Columns 432c and 432d identify, respectively, a child table corresponding to a parent table, and a field that corresponds to a field of the parent table.

The information displayed in the table 420 corresponds to the object model 440, which is in turn similar to the tables 232, 234, 236 of FIG. 2, but where the object model of FIG. 4 includes an additional table. The object model 440 includes a header table 442, which is referred to by an item table 444, a partners table 446, and an appointments table 448. Each of the tables 444, 446, 448 has a foreign key relationship with the header table 442, using the primary key, Field A, of the header table. The table 446 has a foreign key relationship with the table 444, since the table 446 includes the primary key, Attribute C, of the table 444. The appointments table 448 does not have a direct relationship with either table 446 or table 448.

FIG. 4B further illustrates a table 460 that stores mapping information between custom data object instances and standard data object instances. Before considering the table 460, consider an example call 480 to create a new standard object. The call 480 includes an identifier 482a of the type of the custom object 408, an identifier 482b of the particular instance of the custom object whose data is provided, an identifier 482c for the leading data source (in the case of the object model 440, the identifier 482 could be HT1), as well as values 482d-482g for fields of the custom object type. In response to the call 480, an instance 486 of the standard object is created, to which an identifier 488 of the standard object instance is assigned and used to refer to the standard object instance. The instance 486 of the standard object includes the values for the attributes 422 of the custom object instance, as provided in the call 480.

Returning to the table 460, the table includes a column 490a that provides an identifier of a particular mapping between a custom object instance and a standard object instance, although in some cases the column 490a can be omitted if desired. Identifiers of the custom object instance and the standard object instance are provided, respectively, in columns 490b and 490c. The table 460 can include a column 490d that identifies a type of the custom object instance, or a column 490e that identifies a type of the standard object instance.

### Example 6 - Example Process of Updating Persistency Model

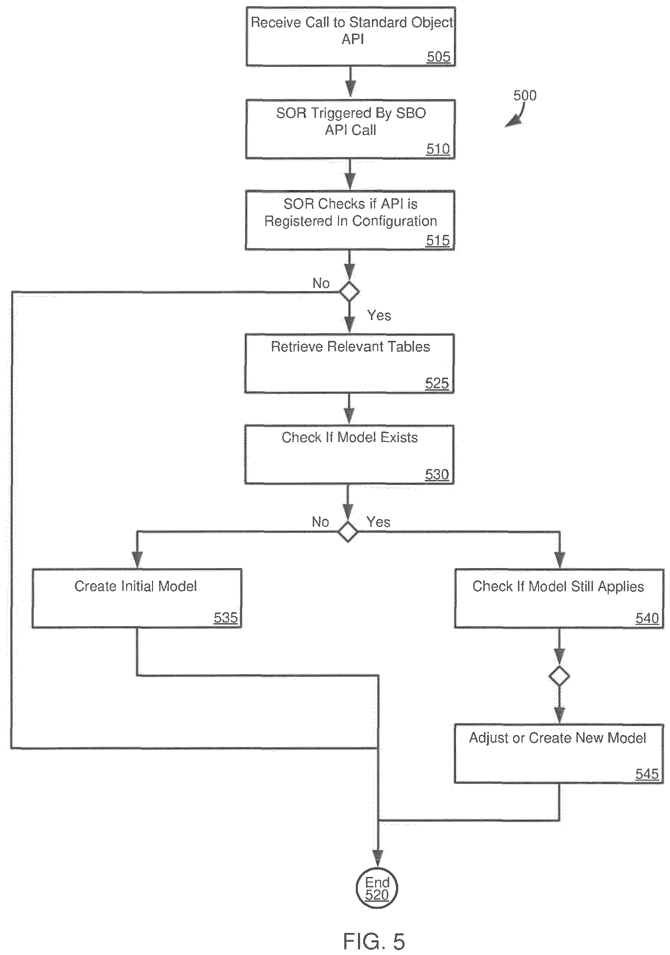

FIG. 5 provides a flowchart of a technique 500 for processing a call by a custom object processing component to a standard object processing component using a source object retrieval component. The process 500 can correspond to actions described in conjunction with FIG. 3, including activities carried out by the source object retrieval component 358.

A call to a standard object API is received at 505, such as from a custom object processing component. A source object retrieval component is triggered by the API call at 510. In response to the triggering, at 515, the standard object retrieval component checks to see if the API is registered in a configuration profile (such as the configuration information 372) for a current standard business object type (such as using configuration for the source object retrieval component 358 of FIG. 3).

At 525, tables, or other data sources, associated with a custom object are retrieved, such as by querying a data dictionary of the custom object processing component. At 530, it is determined if a model for the custom object already exists for use with the source object retrieval component, such as being stored in the object model repository 370 of the source object retrieval persistency 362 of FIG. 3. If a model does not exist for the particular custom object type associated with the call, the model can be created at 535 as previously described. The process 500 can then end at 520.

If it is determined at 530 that a model exists for the custom object type, it can be determined at 540 whether the model still applies. That is, it can be determined whether the existing model is consistent with the data sources of the custom object type, and their definitions, currently being used by the custom object processing component for the custom object type. For example, the operations at 540 can include determining whether the tables used to construct the models are the same, and whether the tables have the same structure as used for the model definition, such as determining whether the tables have had any attributes added or removed.

If it is determined at 540 that no changes have occurred, the process 500 can end at 520. If it is determined at 540 that changes have occurred, the model can either be adjusted, or a new model created, at 545, and then the process 500 can end at 520.

### Example 7 - Example Process for Updating a First Object Instance of a First Object Type, or Process Used Therewith, Based on Change to an Instance of a Second Object Type

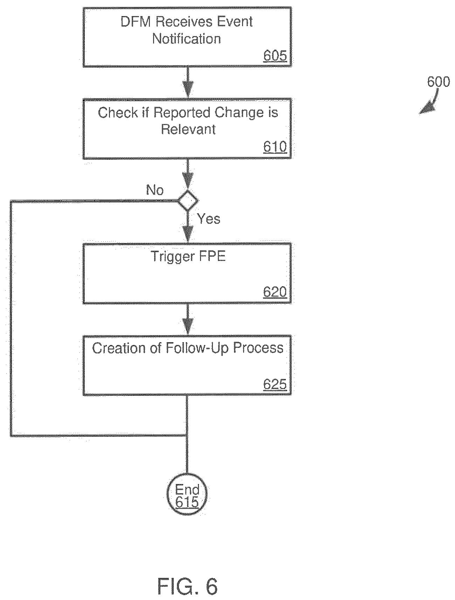

FIG. 6 illustrates a flowchart of a process 600 for monitoring a data flow for changes to instances of custom objects. At 605, a data flow monitoring component, such as the data flow monitoring component 380 of FIG. 3, receives an event notification. As shown in FIG. 3, an event notification can be received from a database interface. Information about an event can include an identifier of the persistency for the relevant custom data object persistency, an identifier of the changed data set (such as a key value), an identifier of changed member fields/attributes, old and new values for any fields with changed values, and information such as when a change occurred and an identifier of a user or process that made the change.

It is determined at 610 whether the detected change is relevant to processing logic for a standard object associated with a particular custom object type. Determining whether a detected change is relevant can include determining whether a particular change to a data member of the custom object instance/its related standard object instance is used in processing logic for the standard object instance (or uses some additional, related data, such as with custom logic). If it is determined that the change is not relevant, such as because the data member is not used in processing, the process 600 can end at 615. If it is determined that the change is relevant, the process can proceed to 620.

At 620, a follow up execution component is triggered, which creates a follow up process at 625. The follow up process that is created can depend on the nature of the determined change, the nature of the call, or other information. For example, a follow up process can cause values of a persisted version of a standard object instance to be modified, or processes/calculations performed on a first version of the standard object instance can be carried out for the updated version of the standard object instance. The process can then end at 615.

In some cases, when an instance of a custom object is changed, a new version of a standard object instance is created, rather than overwriting values of an existing standard object instance. Information can be maintained that allows various versions of a particular standard object instance (thus also reflecting versions of the corresponding custom object instance). For example, a change log can maintain information for a particular event, including an identifier of a version of the standard object instance existing when the change/event was received, and an identifier of the standard object instance created in response to the event change. That is, different versions of a standard object instance can be assigned different values for the identifier 488 of FIG. 4.

### Example 8 - Example Operations

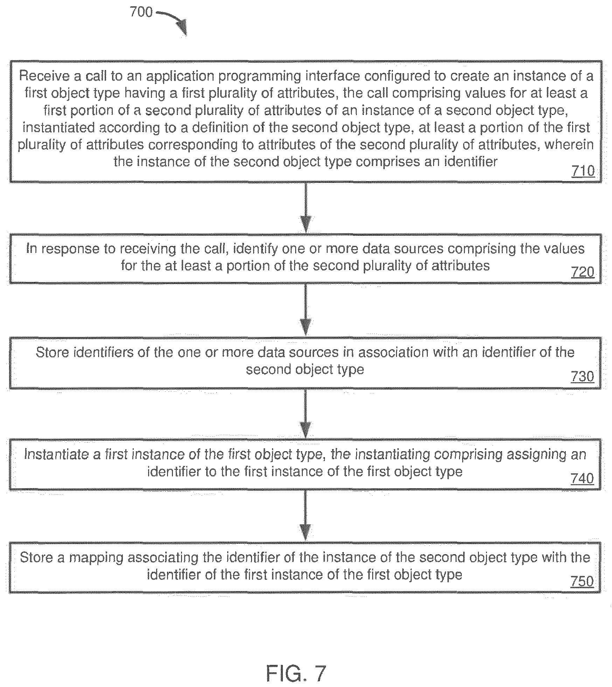

FIG. 7 is a flowchart of a process 700 for associating a first object type with a second object type, including identifying data sources associated with the second object type. At 710, a call to an application programming interface is received, where the application programming interface is configured to create an instance of a first object type having a first plurality of attributes. The call includes values for at least a first portion of a second plurality of attributes of an instance of a second object type, instantiated according to a definition of the second object type. At least a portion of the first plurality of attributes correspond to attributes of the second plurality of attributes. The instance of the second object type includes an identifier.

In response to the receiving the call, one or more data sources are identified at 720 that include the values for the at least a portion of the second plurality of attributes. At 730, identifiers of the one or more data sources are stored in association with an identifier of the second object type. A first instance of the first object type is instantiated at 740. Instantiating the first instance of the first object type includes assigning an identifier to the first instance of the first object type. At 750, a mapping is stored that associates the identifier of the instance of the second object type with the identifier of the first instance of the first object type.

### Example 9 - Computing Systems

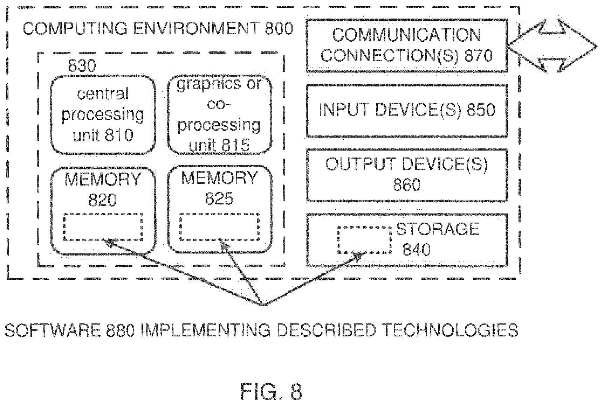

FIG. 8 depicts a generalized example of a suitable computing system 800 in which the described innovations may be implemented. The computing system 800 is not intended to suggest any limitation as to scope of use or functionality of the present disclosure, as the innovations may be implemented in diverse general-purpose or special-purpose computing systems.

With reference to FIG. 8, the computing system 800 includes one or more processing units 810, 815 and memory 820, 825. In FIG. 8, this basic configuration 830 is included within a dashed line. The processing units 810, 815 execute computer-executable instructions, such as for implementing components of the processes of the present disclosure. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 8 shows a central processing unit 810 as well as a graphics processing unit or co-processing unit 815. The tangible memory 820, 825 may be volatile memory (e.g., registers, cache, RAM), nonvolatile memory (e.g., ROM, EEPROM, flash memory, etc.), or some combination of the two, accessible by the processing unit(s) 810, 815. The memory 820, 825 stores software 880 implementing one or more innovations described herein, in the form of computer-executable instructions suitable for execution by the processing unit(s) 810, 815. The memory 820, 825, may also store settings or settings characteristics, databases, data sets, interfaces, displays, object instances, or model.

A computing system 800 may have additional features. For example, the computing system 800 includes storage 840, one or more input devices 850, one or more output devices 860, and one or more communication connections 870. An interconnection mechanism (not shown) such as a bus, controller, or network interconnects the components of the computing system 800. Typically, operating system software (not shown) provides an operating environment for other software executing in the computing system 800, and coordinates activities of the components of the computing system 800.

The tangible storage 840 may be removable or non-removable, and includes magnetic disks, magnetic tapes or cassettes, CD-ROMs, DVDs, or any other medium which can be used to store information in a non-transitory way, and which can be accessed within the computing system 800. The storage 840 stores instructions for the software 880 implementing one or more innovations described herein.

The input device(s) 850 may be a touch input device such as a keyboard, mouse, pen, or trackball, a voice input device, a scanning device, or another device that provides input to the computing system 800. The output device(s) 860 may be a display, printer, speaker, CD-writer, or another device that provides output from the computing system 800.

The communication connection(s) 870 enables communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc., that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 10 - Cloud Computing Environment

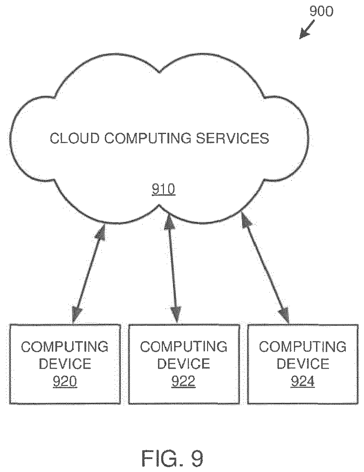

FIG. 9 depicts an example cloud computing environment 900 in which the described technologies can be implemented. The cloud computing environment 900 comprises cloud computing services 910. The cloud computing services 910 can comprise various types of cloud computing resources, such as computer servers, data storage repositories, networking resources, etc. The cloud computing services 910 can be centrally located (e.g., provided by a data center of a business or organization) or distributed (e.g., provided by various computing resources located at different locations, such as different data centers and/or located in different cities or countries).

The cloud computing services 910 are utilized by various types of computing devices (e.g., client computing devices), such as computing devices 920, 922, and 924. For example, the computing devices (e.g., 920, 922, and 924) can be computers (e.g., desktop or laptop computers), mobile devices (e.g., tablet computers or smart phones), or other types of computing devices. For example, the computing devices (e.g., 920, 922, and 924) can utilize the cloud computing services 910 to perform computing operations (e.g., data processing, data storage, and the like).

### Example 11 - Implementations

Although the operations of some of the disclosed methods are described in a particular, sequential order for convenient presentation, it should be understood that this manner of description encompasses rearrangement, unless a particular ordering is required by specific language set forth. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 8, computer-readable storage media include memory 820 and 825, and storage 840. The term computer-readable storage media does not include signals and carrier waves. In addition, the term computer-readable storage media does not include communication connections (e.g., 870).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. It should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one hardware processor;
at least one memory coupled to the at least one hardware processor; and
one or more computer-readable storage media storing computer-executable instructions that, when executed, cause the computing system to perform operations comprising.
receiving a call to an application programming interface configured to create an instance of a first object type having a first plurality of attributes, the call comprising values for at least a first portion of a second plurality of attributes of an instance of a second object type, instantiated according to a definition of the second object type, at least a portion of the first plurality of attributes corresponding to attributes of the second plurality of attributes, wherein the instance of the second object type comprises an identifier;
in response to the receiving the call, identifying one or more data sources comprising the values for the at least a portion of the second plurality of attributes;
storing identifiers of the one or more data sources in association with an identifier of the second object type;
instantiating a first instance of the first object type, the instantiating comprising assigning an identifier to the first instance of the first object type; and
storing a mapping associating the identifier of the instance of the second object type with the identifier of the first instance of the first object type.

2. The computing system of claim 1, the operations further comprising:
requesting values for at least a second portion of the second plurality of attributes; and
storing the values in attributes of the instance of the first object type, and optionally:
wherein the requesting values is performed using a link between the instance of the second object type and the instance of the first object type.

3. The computing system of claims 1 or 2, the operations further comprising:
requesting values for at least a second portion of the second plurality of attributes; and
storing the values other than in attributes of the instance of the first object type.

4. The computing system of any one of claims 1 to 3, the operations further comprising:
storing a mapping associating the first object type with the second object type.

5. The computing system of any one of claims 1 to 4, wherein the call comprises an identifier of a data source storing values for one or more attributes of the second plurality of attributes, and optionally:
wherein the call comprises an identifier of the second object type.

6. The computing system of any one of claims 1 to 5, wherein storing identifiers of the one or more data sources in association with an identifier of the second object type comprises storing at least one relationship between at least two data sources of the one or more data sources, and optionally:
wherein the least one relationship is determined by analyzing a data dictionary or information schema.

7. The computing system of any one of claims 1 to 6, the operations further comprising:
determining that a value of an attribute of the second plurality of attributes has changed; and
in response to determining that a value of the attribute of the second plurality of attributes has changed, updating a value of an attribute of the first plurality of attributes to provide an updated value, and optionally:
the operations further comprising:
in response to determining that a value of the attribute of the second plurality of attributes has changed, triggering a process comprising one or more calculations performed using the updated value.

8. The computing system of claim 7, the operations further comprising:
determining whether the attribute of the second plurality of attributes is used in a computing process involving the first instance of the first object type.

9. The computing system of any one of claims 1 to 8, the operations further comprising:
persisting data of the instance of the second object type in a serialized format to provide persisted data, and optionally:
the operations further comprising:
in a process using values for at least a portion of the first plurality of attributes, retrieving values for one or more attributes of the second plurality of attributes from the persisted data.

10. The computing system of any one of claims 1 to 9, wherein the call is a first call, the operations further comprising:
receiving a second call to the application programming interface, the second call comprising values for at least a first portion of a third plurality of attributes of an instance of a third object type, the third object type being different from the second object type and the first object type, instantiated according to a definition of the third object type, at least a portion of the first plurality of attributes corresponding to attributes of the third plurality of attributes, wherein the instance of the third object type comprises an identifier;
in response to the receiving the second call, identifying one or more data sources comprising the values for the at least a first portion of the third plurality of attributes;
storing identifiers of the one or more data sources storing values for the at least a first portion of the third plurality of attributes in association with an identifier of the third object type;
instantiating a second instance of the first object type, the instantiating comprising assigning an identifier to the second instance of the first object type; and
storing a mapping associating the identifier of the instance of the third object type with the identifier of the second instance of the first object type.

11. The computing system of claim 10, the operations further comprising:
storing a mapping associating the first object type with the third object type.

12. The computing system of any one of claims 1 to 11, the operations further comprising:
determining that at least one data source of the one or more data sources has changed; and
in response to determining that at least one data source of the one or more data sources has changed, updating the identifiers of the one or more data sources, or an indication of a relationship between two or more data sources of the one or more data sources, to reflect that at least one data source of the one or more data sources has changed.

13. A method, implemented in a computing system comprising at least one hardware processor and at least one memory coupled to the at least one hardware processor; the method comprising:
receiving a call to an application programming interface configured to create an instance of a first object type having a first plurality of attributes, the call comprising values for at least a first portion of a second plurality of attributes of an instance of a second object type, instantiated according to a definition of the second object type, at least a portion of the first plurality of attributes corresponding to attributes of the second plurality of attributes, wherein the instance of the second object type comprises an identifier;
in response to the receiving the call, identifying one or more data sources comprising the values for the at least a portion of the second plurality of attributes;
storing identifiers of the one or more data sources in association with an identifier of the second object type;
instantiating a first instance of the first object type, the instantiating comprising assigning an identifier to the first instance of the first object type; and
storing a mapping associating the identifier of the instance of the second object type with the identifier of the first instance of the first object type.

14. The method of claim 13, further comprising:
receiving a second call to the application programming interface, the second call comprising values for at least a first portion of a third plurality of attributes of an instance of a third object type, the third object type being different from the second object type and the first object type, instantiated according to a definition of the third object type, at least a portion of the first plurality of attributes corresponding to attributes of the third plurality of attributes, wherein the instance of the third object type comprises an identifier;
in response to the receiving the second call, identifying one or more data sources comprising the values for the at least a first portion of the third plurality of attributes;
storing identifiers of the one or more data sources storing values for the at least a first portion of the third plurality of attributes in association with an identifier of the third object type;
instantiating a second instance of the first object type, the instantiating comprising assigning an identifier to the second instance of the first object type; and
storing a mapping associating the identifier of the instance of the third object type with the identifier of the second instance of the first object type.

15. One or more non-transitory computer-readable storage media comprising:
computer-executable instructions that, when executed by a computing system comprising at least one hardware processor and at least one memory coupled to the at least one hardware processor, cause the computing system to receive a call to an application programming interface configured to create an instance of a first object type having a first plurality of attributes, the call comprising values for at least a first portion of a second plurality of attributes of an instance of a second object type, instantiated according to a definition of the second object type, at least a portion of the first plurality of attributes corresponding to attributes of the second plurality of attributes, wherein the instance of the second object type comprises an identifier;
computer-executable instructions that, when executed by the computing system, cause the computing system to, in response to receiving the call, identify one or more data sources comprising the values for the at least a portion of the second plurality of attributes;
computer-executable instructions that, when executed by the computing system, cause the computing system to store identifiers of the one or more data sources in association with an identifier of the second object type;
computer-executable instructions that, when executed by the computing system, cause the computing system to instantiate a first instance of the first object type, the instantiating comprising assigning an identifier to the first instance of the first object type; and
computer-executable instructions that, when executed by the computing system, cause the computing system to store a mapping associating the identifier of the instance of the second object type with the identifier of the first instance of the first object type.
